# EUROPÄISCHE PATENTANMELDUNG

(11) **EP 0 924 592 A2**
(43) Veröffentlichungstag der Anmeldung: **23.06.1999**
(21) Anmeldenummer: 98123064.2
(22) Anmeldetag: 09.12.1998
(51) Int. Cl.: G06F 1/00

(54) **Manipulationsgeschütztes elektrisches Gerät**

(30) Priorität: 22.12.1997 DE 29722653 U
(71) Anmelder: SIEMENS AKTIENGESELLSCHAFT, 80333 München (DE)
(72) Erfinder: Schneeberger, Reinhold, Dipl.-Ing. (FH), 90556 Seukendorf (DE); Bröckelmann, Uwe, Dipl.-Ing., 82194 Gröbenzell (DE)

(57) **Zusammenfassung**

Es enthält eine zu schützende elektrische Einheit (1). Diese ist von einer flexiblen Leiterplatte (3) vollständig umhüllt, welche mit einem Netz von elektrisch verknüpften Leiterbahnen (17) belegt ist. Eine Überwachungsschaltung (2) ist mit dem Netz von Leiterbahnen verbunden und erfaßt mechanische Beschädigungen. Eine Beschichtung (19) ist auf der flexiblen Leiterplatte (3) so aufgebracht, daß bei einer Verletzung bzw. Ablösung der Beschichtung eine mechanische Beschädigung der Leiterbahnen (17) erfolgt. Die Beschichtung ist vorzugsweise eine aushärtbare Vergußmasse.

## Beschreibung

Die Erfindung betrifft ein manipulationsgeschütztes elektrisches Gerät. Dieses enthält zumindest eine elektrische Einheit, insbesondere eine elektrische Leiterplatte, welche mindestens eine gegen Manipulation zu schützende elektrische Schaltung und/oder mindestens ein gegen Manipulation zu schützendes elektrisches Bauelemente aufweist. Desweiteren ist vorhanden eine flexible Leiterplatte, welche zumindest auf einer Außenseite mit einem Netz von elektrisch verknüpften Leiterbahnen insbesondere mäanderförmig belegt ist und die elektrische Einheit vollständig umhüllt. Ferner ist zumindest eine Überwachungsschaltung vorhanden, welche mit dem Netz von elektrisch verknüpften Leiterbahnen verbunden ist und mechanische Beschädigungen des Netzes erfaßt.

Aus der DE 43 12 905 ist eine Schutzeinrichtung zur Sicherung von gespeicherten Daten bekannt. Dabei ist eine zu schützende elektronische Einheit mit einer Durchbohrschutzfolie umgeben. Auf dieser befinden sich ein Netz von mäanderförmigen Leiterbahnen. Der Schutzeffekt besteht darin, daß eine mechanische Beschädigung einer Leiterbahn des Netzes, z.B. durch Anbohren, zum Ansprechen einer Auswerteschaltung führt. Diese kann abhängig von der jeweiligen Anwendung unterschiedlichste Signale abgeben bzw. Aktionen veranlassen. Gegebenenfalls kann bei einer detektierten Manipulation gezielt der Dateninhalt von innen liegenden, speichernden Bauelementen gelöscht werden. Zusätzlich sind an den seitlichen Faltstellen und Überlappungen der Durchbohrschutzfolie spezielle Leiterbahnen herausgeführt und separate Hilfskontaktpunkte angebracht. Hiermit soll an diesen besonders empfindlichen Stellen des Wickels der Durchbohrschutzfolie der Versuch einer Öffnung von der Seite detektiert werden.

Diese Anordnung weist den Nachteil auf, die Montage der Durchbohrschutzfolie insbesondere an den besonders manipulationsgefährdeten Überlappungsstellen der Durchbohrschutzfolie einen hohen Aufwand erfordert. Es müssen insbesondere die auf der Innenseite der Überlappungen vorhandenen Kontaktpunkte im zusammengefalteten Zustand der Durchbohrschutzfolie paßgenau miteinander kontaktiert werden.

Der Erfindung liegt die Aufgabe zu Grunde, ein manipulationsgeschütztes elektrisches Gerät bereitzustellen, bei dem ein manipulationssicherer Verschluß einer mit einem Netz von elektrisch verknüpften Leiterbahnen insbesondere mäanderförmig belegten flexiblen Leiterplatte insbesondere an deren Überlappungsstellen einfacher herstellbar ist.

Die Aufgabe wird dadurch gelöst, daß eine Beschichtung zumindest auf der Außenseite der flexiblen Leiterplatte so aufgebracht ist, daß bei einer Ablösung der Beschichtung eine mechanische Beschädigung des Netzes der elektrisch verknüpften Leiterbahnen erfolgt. Bevorzugt ist die Beschichtung in Form einer aushärtbaren Vergußmasse ausgeführt. Vorteilhaft weist die Beschichtung nahezu keine thermoplastische Eigenschaften bei Einwirkung von äußeren Temperaturen auf. Besonders vorteilhaft ist es, wenn die Beschichtung bei Temperatureinwirkung versprödet.

Die Umkleidung der eine elektrische Einheit des manipulationsgeschützten Geräts umgebenden flexiblen Leiterplatte mit einer Vergußmasse hat den besonderen Vorteil, daß diese sehr fest auf dem insbesondere aus Silberleitlack bestehenden Netz von elektrisch verknüpften Leiterbahnen der flexiblen Leiterplatte haftet. Besonders nach möglicher Aushärtung der Vergußmasse kann diese nicht ohne gleichzeitiges Abreißen der Silberleitlackbahnen von der flexiblen Leiterplatte gelöst werden. Die Haftkraft zwischen Vergussmasse und den Leiterbahnen des Netzes ist höher als die Haftkraft zwischen Leiterbahnen und flexibler Leiterplatte einerseits, und höher als die innere Haltekraft zwischen den Molekülen im Inneren der Leiterbahnen des Netzes andererseits. Durch diese Eigenschaften wird die einfachere und gegenüber Manipulationen besonders sichere Durchführung von Leitungen durch die flexible Leiterplatte verbessert. Dies betrifft insbesondere den Anschluß z.B. einer Tastatur oder eines Displays an die innen liegende elektrische Einheit des erfindungsgemäßen elektrischen Geräts. Neben einer Verhinderung einer Aufbohrung durch die in der Regel eng liegenden Leiterbahnen auf der flexiblen Leiterplatte ist auch ein Vordringen an die Leiterbahnen des Netzes zu ihrem evtl. Kurzschließen oder zum Abheben der Überlappungsstellen nicht mehr zerstörungsfrei möglich.

Besonders dann, wenn die Beschichtung nahezu keine thermoplastischen Eigenschaften gegenüber Temperatureinwirkung aufweist, und bei Temperatureinwirkung versprödet oder zerbricht bzw. zur Rißbildung neigt, kann auch durch eine Erhitzung der Beschichtung eine Zerstörung des Netzes der verknüpften Leiterbahnen und damit eine Detektion eines derartigen Manipulationsversuches nicht verhindert werden. Gegebenenfalls kann die Vergussmasse eingefärbt sein, während sie z.B. im Bereich eines möglichen Displays auf der innen liegenden elektrischen Einheit auch transparent sein kann.

Schließlich kann die Beschichtung des manipulationsgeschützten elektrischen Geräts so ausgebildet sein, daß eine Zersetzung nur solchen mit chemischen Mitteln möglich ist, welche auch das Netz der darunter liegenden elektrisch verknüpften Leiterbahnen beschädigen. Somit sind auch derartige Manipulationen detektierbar.

Die Erfindung wird desweiteren anhand der in den nachfolgend kurz angeführten Figuren dargestellten Ausführungsbeispiele weiter erläutert. Dabei zeigt
- FIG 1: eine Seitenansicht auf eine Anordnung aus einer elektrischen Einheit und einer flexiblen Leiterplatte in einem noch ungefalteten Zustand, welche zum Zwecke des Manipulationsschutzes die flexible Leiterplatte um die Einheit wickelbar ist, und
- FIG 2: einen Querschnitt durch ein gemäß der Erfindung gestaltetes manipulationsgeschütztes elektrisches Gerät, wobei zumindest die Außenseite der flexiblen Leiterplatte mit einer nicht zerstörungsfrei lösbaren Beschichtung belegt ist.

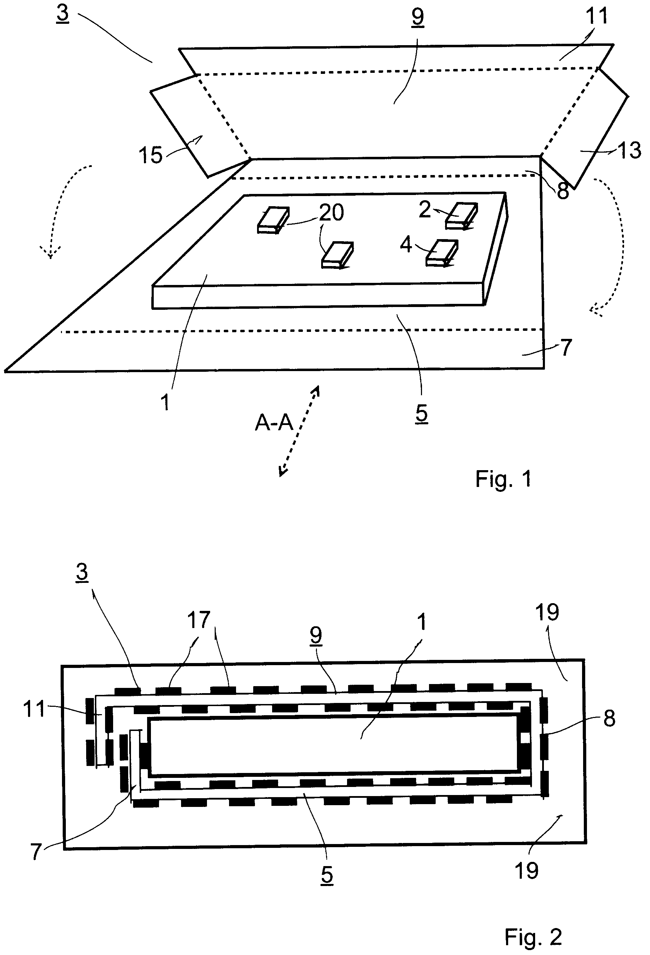

Gemäß der Darstellung von Figur 1 weist das erfindungsgemäße manipulationsgeschützte elektrische Gerät zumindest eine elektrische Einheit 1 auf. Diese kann z.B. eine elektrische Leiterplatte enthalten, welche mindestens eine gegen Manipulation zu schützende elektrische Schaltung und/oder elektrische Bauelemente 20 trägt. Die elektrische Einheit 1 kann auch nach außen führende Kabelverbindungen aufweisen, welche in Figur 1 aber aus Gründen der besseren Übersicht nicht dargestellt sind. Zur vollständig dichten und manipulationssicheren Umpackung elektrische Einheit 1 ist eine flexible Leiterplatte 3 vorgesehen, welche zumindest auf einer Außenseite mit einem Netz von elektrisch verknüpften Leiterbahnen 17 insbesondere mäanderförmig belegt ist. Diese sind in der Schnittdarstellung von Figur 2 dargestellt. Im Beispiel der Figur 1 ist die flexible Leiterplatte 3 in einem noch geöffneten, d.h. die elektrische Einheit 1 noch nicht umhüllenden Zustand gezeigt.

Beispielhaft weist die flexible Leiterplatte 3 ein Bodenteil 5 auf, in das die elektrische Einheit 1 eingelegt ist. Vorteilhaft sind die vordere und hintere Querkante 7, 8 des Bodenteils 5 zum Zwecke der Herstellung von Überlappungen abwinkelbar ausgeführt. Die flexible Leiterplatte 3 weist ferner ein einteilig mit dem Bodenteil 5 verbundenes Deckelteil 9 auf, welches in Figur 1 im noch ausgeschwenkten Zustand dargestellt ist. Vorteilhaft sind auch dessen vordere Querkante 11 und Seitenkanten 13,15 zum Zwecke der Herstellung von Überlappungen mit dem Bodenteil 5 abwinkelbar ausgeführt. Die elektrische Einheit 1 weist zusätzlich zumindest eine Überwachungsschaltung 2, welche mit dem Netz von elektrisch verknüpften Leiterbahnen 17 insbesondere auf den Außenseiten der flexiblen Leiterplatte 1 verbunden ist und mechanische Beschädigungen des Netzes erfaßt. Die elektrische Einheit 1 kann zusätzlich zumindest eine zweite Überwachungsschaltung 4 aufweisen, womit hohe Temperaturen erkannte werden können, welche zum Zwecke eines Manipulationsversuches z.B. durch Schmelzung der Beschichtung von außen aufgebracht werden.

Die in Figur 1 beispielhaft dargestellte elektrische Einheit 1 mit den exemplarisch darauf befindlichen Schaltungen 20 und Bauelementen 2, 4 kann nun so in der flexiblen Leiterplatte 3 verpackt werden, daß kein direkter Zugriff von außen mehr möglich ist. Hierzu werden im Beispiel der Figur 1 Boden- und Deckelteil 5,9 unter Zwischenlage der elektrischen Einheit 1 aufeinander gelegt und mit Hilfe der abwinkelbaren Quer- und Seitenkanten 7, 8, 11, 13 und 15 an den umlaufenden Stirnkanten verschlossen. Dabei ist es lediglich erforderlich, daß die abwinkelbaren Quer- und Seitenkanten in einfacher Weise übereinander gelegt werden. Erfindungsgemäß wird nun eine Beschichtung 19 so zumindest auf der Außenseite der flexiblen Leiterplatte 3 so aufgebracht, daß der Wickel vollständig versiegelt und bei einer Ablösung der Beschichtung eine mechanische Beschädigung des Netzes der elektrisch verknüpften Leiterbahnen 17 unvermeidlich ist.

Figur 2 zeigt eine Querschnittsdarstellung durch ein gemäß der Erfindung aufgebautes manipulationsgeschütztes elektrisches Gerät. Dabei entspricht die Lage der Schnittdarstellung etwa der in Figur 1 durch den Doppelpfeil A-A gezeigten Querebene. Die Bezugszeichen der noch unverschlossenen flexiblen Leiterplatte in Figur 1 entsprechen dem in Figur 2 dargestellten geschlossenen und versiegelten Zustand. In Figur 2 ist eine erfindungsgemäße, bevorzugt als eine aushärtbare Vergußmasse ausgeführte und zumindest die Außenseite der flexiblen Leiterplatte 1 vollständig umschließende Beschichtung 19 deutlich erkennbar. In diese Beschichtung ist das zumindest auf der Außenseite der flexiblen Leiterplatte 9 befindliche, bevorzugt mäanderförmige Netz an elektrisch verknüpften und mit der Überwachungsschaltung verbundenen Leiterbahnen 17 eingebettet.

Die Erfindung hat den Vorteil, daß ein Eindringen in die bzw. ein Abheben der ausgehärteten Beschichtung ohne eine Zerstörung der eingebetteten Leiterbahnen 17 nicht möglich ist. Ferner werden Überlappungen von abgewinkelten Kanten der flexiblen Leiterplatte auf einfache Weise manipulationssicher verschlossen. Dies ist im Beispiel der Figur 2 deutlich bei der auf der linken Seite befindlichen Überlappung aus der Querkante 7 des Bodenteiles 5 und der Querkante 11 des Deckelteiles 5 erkennbar.

## Patentansprüche

1. Manipulationsgeschütztes elektrisches Gerät, mit
a) zumindest einer elektrischen Einheit (1), insbesondere einer elektrischen Leiterplatte, welche mindestens eine gegen Manipulation zu schützende elektrische Schaltung und/oder elektrische Bauelemente (20) enthält,
b) einer flexiblen Leiterplatte (3), welche zumindest auf einer Außenseite mit einem Netz von elektrisch verknüpften Leiterbahnen (17) insbesondere mäanderförmig belegt ist und die elektrische Einheit (1) vollständig umhüllt (5,7,8,9,11,13,15),
c) zumindest einer Überwachungsschaltung (2), welche mit dem Netz von elektrisch verknüpften Leiterbahnen (17) verbunden ist und mechanische Beschädigungen des Netzes erfaßt, und
**gekennzeichnet durch**
d) eine Beschichtung (19), welche zumindest auf der Außenseite der flexiblen Leiterplatte (3) so aufgebracht ist, daß bei einer Verletzung und/oder Ablösung der Beschichtung eine mechanische Beschädigung des Netzes der elektrisch verknüpften Leiterbahnen (17) erfolgt.

2. Manipulationsgeschütztes elektrisches Gerät nach Anspruch 1, wobei die Beschichtung (19) als eine Vergußmasse ausgeführt ist.

3. Manipulationsgeschütztes elektrisches Gerät nach Anspruch 2, wobei die Vergußmasse der Beschichtung (19) aushärtbar ist.

4. Manipulationsgeschütztes elektrisches Gerät nach Anspruch 1, wobei die Beschichtung (19) nahezu keine thermoplastische Eigenschaften gegenüber Temperatureinwirkung aufweist.

5. Manipulationsgeschütztes elektrisches Gerät nach Anspruch 1, wobei die Beschichtung (19) bei Temperatureinwirkung versprödet.

6. Manipulationsgeschütztes elektrisches Gerät nach Anspruch 1, wobei die Beschichtung (19) bei Temperatureinwirkung Rißbildung aufweist.

7. Manipulationsgeschütztes elektrisches Gerät nach Anspruch 1, wobei die Beschichtung (19) so ausgebildet ist, daß eine Zersetzung nur solchen mit chemischen Mitteln möglich ist, welche auch das Netz der elektrisch verknüpften Leiterbahnen (17) beschädigen.
